# EUROPEAN PATENT APPLICATION

(11) **EP 3 141 569 A1**
(43) Date of publication of application: **15.03.2017**
(21) Application number: 15184331.5
(22) Date of filing: 08.09.2015
(51) Int. Cl.: C08G 18/48, C08G 18/66, C08G 18/75, C08G 18/79, C08G 18/08, C08G 18/12, C08G 18/20, C08G 18/32, C08G 18/34, C09J 175/08

(54) **COLD SEAL ADHESIVES BASED ON AQUEOUS POLYURETHANE DISPERSIONS**

(71) Applicant: Henkel AG & Co. KGaA, 40589 Düsseldorf (DE)
(72) Inventor: ZHAO, Ligang, 40593 Düsseldorf (DE); GIMENO GORMAZ, Nélida, 50010 Zaragoza (ES); PÉREZ BRIONES, Aurora, 03780 Pego (ES); EISFELD, Heike, 40764 Langenfeld (DE); WAGNER, Sara, 40822 Mettmann (DE); STEPHENSON, Brian, Farndon Newark, Nottinghamshire NG243SA (GB)

(57) **Abstract**

The present invention relates to aqueous polyurethane dispersions prepared with no catalyst or very low loading of organic catalyst that can be used as cold sealable adhesives, are surfactant and solvent free and have low VOC emissions, are environmentally friendly, and provide for homogeneous and aging-resistant adhesives that can be used for cosmetic, pharmaceutical and food packaging applications. Also encompassed are processes for their production, compositions containing them and their use as adhesives.

## Description

The present invention relates to aqueous polyurethane dispersions prepared with no catalyst or very low loading of organic catalyst that can be used as cold sealable adhesives, are surfactant and solvent free and have low VOC emissions, are environmentally friendly, and provide for homogeneous and aging-resistant adhesives that can be used for cosmetic, pharmaceutical and food packaging applications. Also encompassed are processes for their production, compositions containing them and their use as adhesives.

Cold-sealable adhesives are a special type of adhesives, which after being coated onto substrates, form a layer that strongly bonds to itself when pressure is applied at room temperature. Most of the adhesive compositions used for cold seal applications are based on polymer dispersions blended with natural rubber latex. Natural latex dispersions are however susceptible to bacterial degradation and oxidation and thus have drawbacks with regard to shelf life, odor development and yellowing. In addition, they are the potential cause of allergic reactions. Although alternatives exist, such as synthetic rubber or polyisoprene, these lack the performance of natural rubber in that they show decreased sealability to itself and lower seal strength. Other alternatives, such as polychloroprene show a similar performance as natural rubber, but the presence of chlorine in their backbone makes them undesirable for food and medical applications. In addition, they also show discoloration (yellowing) and odor development.

Polyurethane waterborne dispersions are innovative materials that are being increasingly used as a replacement to natural and synthetic rubbers to prepare cold seal adhesives. However, the known PU dispersions have drawbacks in that they contain organic solvents, metal-based catalysts, in particular organometallic catalysts, and volatile organic compounds (VOC) needed for their preparation, rendering them unsuited for food, cosmetic and pharmaceutical packaging applications under existing regulations, such as FDA regulations (FDA 175.105). Other known PU dispersions are susceptible to hydrolysis and thus show low resistance to water due to the presence of ester linkages, contain aromatic residues making them susceptible to degradation and discoloration upon exposure to UV light or show inferior adhesive properties.

There is thus need in the art for polyurethane dispersions that overcome the main drawbacks of known systems and can be used to replace natural rubber latex in cold seal adhesives.

The present invention described herein solves some of the known issues, allowing the production of waterborne polyurethane dispersions that are suitable as a replacement to natural rubber latex in that they have similar mechanical and adhesive performance and at the same time overcome the main drawbacks of natural rubber in that they have low odor, excellent transparency and show no discoloration and of existing PU dispersions in that they can be prepared in the absence of catalyst or using a very low loading of organic catalyst (below 5 ppm), are purely aliphatic preventing the yellowing and polyether based for improving water stability. In the final dispersions there are no organic solvents, VOC or inorganic fillers. The invention generally also relates to a method to produce a dispersion of polyurethane particles in water, without using any surfactants, by applying shear forces. To obtain stable dispersions, anionic stabilizers are incorporated into the polyurethane chain, not affecting the water resistance of the final product.

In a first aspect, the present invention thus relates to a process for manufacturing an aqueous polyurethane dispersion (PUD), the process including:
(1) forming an NCO-terminated polyurethane prepolymer from a reaction mixture comprising or consisting of:
   (a) at least one polyether polyol with a number average molecular weight Mₙ in the range of 400 to 10000 g/mol, preferably 500 g/mol to 3000 g/mol, wherein said at least one polyether polyol preferably is an aliphatic polyether polyol;
   (b) at least one anionic stabilizer, wherein the at least one anionic stabilizer comprises at least two hydroxyl groups and at least one negatively charged functional group, preferably a carboxyl or sulfonic acid group; and
   (c) at least one aliphatic polyisocyanate, preferably at least one aliphatic di- and/or triisocyanate, wherein the at least one polyisocyanate is used in molar excess relative to the hydroxy groups of the other components of the reaction mixture to obtain an NCO-terminated polyurethane prepolymer;
      wherein formation of the NCO-terminated polyurethane prepolymer is carried out in the absence of a tin-containing catalyst, preferably in the absence of a metal catalyst;
(2) dispersing the prepolymer into a continuous aqueous phase under application of shear forces, preferably by mechanical stirring, to obtain an emulsion; and
(3) reacting the prepolymer with at least one chain extension agent to obtain an aqueous polyurethane dispersion.

In another aspect, the invention relates to the aqueous polyurethane dispersion obtainable according to the process described herein.

Further aspects of the invention relate to adhesive compositions that contain the aqueous polyurethane dispersion disclosed herein and the use of the aqueous polyurethane dispersion in adhesives.

"At least one", as used herein, means one or more, i.e. 1, 2, 3, 4, 5, 6, 7, 8, 9 or more. "At least one", as used herein in relation to any component, refers to the number of chemically different molecules, i.e. to the number of different types of the referenced species, but not to the total number of molecules. For example, "at least one polyol" means that at least one type of molecule falling within the definition for a polyol is used but that also two or more different molecule types falling within this definition can be present, but does not mean that only one molecule of said polyol is present.

If reference is made herein to a molecular weight, this reference refers to the number average molecular weight Mₙ, if not explicitly stated otherwise. The number average molecular weight Mₙ can be calculated based on end group analysis (OH numbers according to DIN 53240) or can be determined by gel permeation chromatography according to DIN 55672-1:2007-08 with THF as the eluent. If not stated otherwise, all given molecular weights are those determined by end group analysis. The weight average molecular weight M_{w} can be determined by GPC, as described for Mₙ.

All percentages given herein in relation to the compositions or formulations relate to weight % relative to the total weight of the respective composition or formula, if not explicitly stated otherwise.

The at least one polyol (a) preferably is a non-functionalized polyol, i.e. contains no functional groups besides the hydroxyl groups. Specifically, it does not contain halogen groups. In various embodiments, it does also not contain vinyl groups. The polyol (a) is a polyether polyol, preferably an aliphatic polyether polyol, more preferably an aliphatic polyether diol.

The polyether polyol may be a polyalkylene glycol homo- or copolymer, preferably a polypropylene glycol homo- or copolymer, a polyethylene glycol homo- or copolymer, a polytetramethylene glycol homo- or copolymer, or a polypropylenglycol/polyethyleneglycol block copolymer. In various embodiments, the polyether polyol has a number average molecular weight Mₙ of 400 to 10000, preferably 400 to 4000, more preferably 500 to 3000 g/mol.

In various embodiments, the polyol (a) does not comprise polyester polyols or aromatic polyols.

The reaction mixture further comprises at least one anionic stabilizer, wherein the at least one anionic stabilizer comprises at least two hydroxyl groups and at least one negatively charged functional group, preferably a carboxyl or sulfonic acid group.

The term "stabilizer", as used herein in the context of anionic stabilizers, relates to a class of molecules that can stabilize the droplets in a dispersion or emulsion, i.e. prevent coagulation or coalescence. In various embodiments the stabilizer molecules comprise a hydrophilic and a hydrophobic part, with the hydrophobic part interacting with the droplet and the hydrophilic part be exposed to the solvent. While commonly used stabilizers are surfactants and may bear an electric charge, for example may be anionic surfactants or cationic surfactants, or may, alternatively, be non-ionic, the present invention avoids the use of surfactants, but uses stabilizer compounds that are built into the polyurethane polymer during (pre)polymerformation that provide for self-emulsifiable polyurethanes which spontaneously form stable dispersions in water without the assistance of external emulsifiers and exhibit increased stability.

The stabilizers used herein comprise anionic groups. The presence of such charged groups increases the stability of the dispersed polymer droplets or particles. Suitable anionic groups include, but are not limited to acidic groups, such as carboxylic acid or sulfonic acid groups and their respective salts. Concrete compounds suitable as anionic stabilizers in the sense of the present invention are 2,2-bis(hydroxyalkyl)alkane monocarboxylic acids, in particular 2,2-bis(hydroxymethyl)alkane monocarboxylic acids with a total carbon atom number of 5-8, such as 2,2-bis(hydroxymethyl)propionic acid (dimethylol propionic acid; DMPA). Also suitable are sulfonated polydiols with a molecular weight M_{w} in the range of up to 1000 g/mol, preferably up to 500 g/mol. Such sulfonated polydiols, for example propoxylated 1-methyl-2-methylol-3-hydroxy-1-propanesulfonate with a molecular weight M_{w} of about 430 g/mol, are commercially available under the name GS-7Q (Yedang G & Co. Ltd).

In various embodiments, the above-described anionic stabilizers are combined with other compounds that can act as stabilizers, in particular nonionic stabilizers. In various embodiments, such nonionic stabilizers comprise polyols, preferably diols, or a mixture of different polyols and/or diols, including the monomeric diols and certain polyether polyols that have been described above in connection with the polyol (a). Such nonionic stabilizers have HLB (hydrophile lipophile balance) values between 6 and 19. The HLB values are calculated by calculating the molecular weight of the hydrophilic portion of the molecule and dividing said molecular weight of the hydrophilic part of the molecule by the total molecular weight of the molecule and then dividing the obtained percentage by 5. Typical nonionic stabilizers for oil-in-water emulsions have HLB values of 8-18. Preferred monomeric diols are glycols, such as ethylene glycol, propylene glycol, butylene glycol, neopentyl glycol and the like and (as polyether polyols) polymers thereof, such as polyethylene glycol, polypropylene glycol, and polybutylene glycol and copolymers of ethylene glycol, propylene glycol, and butylene glycol, preferably of ethylene glycol and propylene glycol. The average molecular weight M_{w} of such polymeric stabilizers is preferably in the range of up to about 4000 g/mol, preferably up to about 3000 g/mol, more preferably up to about 2000 g/mol. Suitable non-ionic ethylene glycol/propylene glycol stabilizers are for example those commercially available under the trademark name Pluronic® from BASF, for example Pluronic PE3500.

In preferred embodiments of the invention, the at least one anionic stabilizer, such as DMPA and/or a sulfonated polydiol, is combined with a nonionic polyol stabilizer, preferably diol stabilizer, as defined above. In one specific embodiment, the mixture comprises at least one ethyleneglycol/propyleneglycol copolymer with a molecular weight M_{w} of up to 3000 g/mol and at least one anionic diol stabilizer, preferably DMPA or a sulfonated polydiol or both.

In such mixtures the weight ratio of non-ionic to anionic stabilizer usually ranges from about 0:1 to about 20:1, preferably about 2:1 to 1:3.

The term "reaction mixture", as used herein, relates to the mixture of the polyols, including the stabilizer(s) and the polyisocyanate(s). "Polyol mixture", as used herein, relates to the at least one polyol (a), the at least one stabilizer, and, optionally, any additional polyols that may be present.

It is preferred that the polyol mixture does not contain any organic solvents or surfactants and no further additives, i.e. consists of polyols, preferably those defined above, and the stabilizers.

In various embodiments, the polyol mixture comprises about 20 to about 99 wt.-%, preferably 30 to 85 wt.-%, of the at least one polyol (a), preferably a mixture of different polyether polyols, relative to the weight of the polyol mixture. The at least one polyol (a) may comprise a nonionic stabilizer polyol as defined above.

The anionic stabilizer is usually contained in amounts of about 0.1 to 20 wt.-%, preferably 2 to 10 wt.-%, more preferably 2 to 6 wt.-% relative to the weight of the reaction mixture. If a mixture of stabilizing compounds is employed, anionic stabilizers as defined above, may be used in amounts of 1 to 15 wt.-% and non-ionic stabilizers in amounts of 1 to 30 wt.-% relative to the reaction mixture. In various embodiments, the anionic stabilizers as defined above, may be used in amounts of 2 to 6 wt.-%, preferably 2 to 4.5 wt.-%, and non-ionic stabilizers in amounts of 2 to 4 wt.-%, preferably 2 to 3 wt.-%, relative to the reaction mixture.

The final reactant employed in the formation of the polyurethane prepolymer is an aliphatic polyisocyanate. Any aliphatic compound which includes at least two isocyanate groups is within the contemplation of the present invention. It is preferable, however, that the polyisocyanate be a diisocyanate. The incorporation of small amounts of isocyanate with a functionality higher than two, in particular a triisocyanate, is also contemplated and may under certain circumstances even be advantageous. Such polyisocyanates can act as cross-linkers. In this case where the polyisocyanate acts as a cross-linker, polyisocyanates based on hexamethylene diisocyanate are preferred. Suitable diisocyanates include, without limitation, hexamethylene diisocyanate (HDI), isophorone diisocyanate (IPDI), methylene-4,4-bis(cyclohexyl)diisocyanate (H12MDI) and mixtures thereof. Among particularly preferred aliphatic diisocyanates are isophorone diisocyanate, hexamethylene diisocyanate, and mixtures thereof. Particularly preferred is IPDI, since it is FDA approved. Suitable polyisocyanates are, for example, commercially available under the trademark name Desmodur® from Bayer AG (DE).

The polyisocyanate is used in molar excess relative to the OH groups of all polyols present in the reaction mixture, i.e. in a concentration in excess of the stoichiometric concentration required to completely react with the hydroxyl groups, the OH/NCO equivalent ratio preferably being 1:1.1 to 1:4, more preferably 1:1.1 to 1:1.3, most preferably 1:1.2 to 1:1.3. Preferably, the amount of the polyisocyanate is 20 % to 150 % in excess of the stoichiometric concentration required to completely react with the hydroxyl groups. The amount of the at least one polyisocyanate in the reaction mixture is typically in the range of 10 to 30 wt.-% relative to the reaction mixture. The remainder of the reaction mixture may be made up by the polyol mixture, as defined above.

In various embodiments, the reaction mixture is essentially free of surfactants and/or polyester polyols and/or aromatic organic compounds.

Providing the polyol mixture may include the step of mixing the polyols (a) and the stabilizers and heating the mixture. The heating may be required in case the polyols employed are solid at room temperature and need to be melted to form the polyol mixture. In preferred embodiments, the polyols and the at least one stabilizer are combined and heated to about 70 to 95°C, for example about 75°C, while stirring the mixture under vacuum to dry. After the mixing, the mixture may be cooled to 60°C for the addition of the isocyanates.

"About", as used herein, relates to ± 10 %, preferably ± 5 % of the numerical value to which it refers. "About 70 °C" thus relates to 70 ± 7, preferably 70 ± 3.5 °C.

The polyol mixture is subsequently combined with at least one polyisocyanate in the reaction mixture to form the prepolymer. The prepolymer reaction usually occurs at elevated temperature, preferably in the range of between about 55°C and about 105°C, more preferably about 60-95 °C, most preferably about 85-95 °C, over a period of between about 1 and about 24 hours, preferably about 1 to about 4 hours, more preferably about 3 hours. Contrary to established protocols, the reaction is carried out in the absence of a tin-based catalyst, preferably in the absence of a metal catalyst or is carried out in the presence of very low amounts of an organic catalyst, such as an amine catalyst, like DABCO (triethylene amine or 1,4-diazabicyclo[2.2.2]octane). In preferred embodiments of the invention, the reaction mixture does not comprise a catalyst, i.e. neither a metal catalyst nor an organic catalyst.

The reaction continues until the free isocyanate content reaches or comes very close to the calculated value, as determined by standard titration with dibutylamine. Preferred values for the free isocyanate content in the prepolymer are in the range between 0.2 and 3 wt.-%, preferably 0.2 to 2 wt.-%, more preferably 0.5 to 1.5 wt.-% relative to the total amount of polyols, including the stabilizer(s), and polyisocyanate in the mixture.

Once the free isocyanate content reaches the predetermined value, as defined above, the temperature may be reduced, for example to about 60 °C.

In various embodiments, the prepolymer has a number average molecular weight Mₙ of 3000 to 30000, preferably 3000 to 12000 g/mol, more preferably 9000-11000 g/mol.

The obtained prepolymer is then dissolved in a solvent. Preferred are organic solvents, in particular those being fully miscible with water, such as acetone. In various embodiments, such solvents, in particular acetone, are used in amounts of up to 70 wt.-%, preferably 35 to 68 wt.-%, more preferably between 50 and 60 wt.-% relative to the prepolymer/solvent mixture. The solvent is preferably removed after step (3), for example by vacuum distillation. To dissolve the prepolymer, the solution may be heated, for example to a temperature of 40 to 70 °C, preferably 50 and 60 °C, preferably under stirring.

In various embodiments, the prepolymer may be neutralized at this stage by using a suitable neutralization agent. In case an anionic acidic stabilizer is used, an amine base, such as 2-dimethylaminoethanol may be used.

The thus formed prepolymer solution is then dispersed into a continuous aqueous phase, preferably water. The dispersing step may be carried out at elevated temperature, for example in the range of about 30 to 60 °C, for example at about 40 °C. The dispersing step may include emulsifying the polyurethane prepolymer into a continuous aqueous phase, preferably water, to form an emulsion, preferably under the action of a shear force. In various embodiments, the shear force is brought about by means of mechanical stirring only, for example using a mechanical stirrer at up 900 rpm, for example 200-700 rpm, preferably 200-400 rpm.

The term "emulsion", as used herein, relates to oil-in-water (O/W) emulsions, i.e. emulsions in which water is used in excess and is the continuous medium. In the described processes, stable droplets are obtained, which have typically a size between 50 and 500 nm, preferably between 100 and 400 nm, more preferably between 100 and 200 nm, as determined by dynamic light scattering (DLS) according to ISO 22412.

During chain extension in step (3), the isocyanate end-groups of the prepolymer are reacted with an appropriate chain extender containing at least two terminal NCO-reactive groups, for example a diamine or triamine, such as hydrazine, an alkylene diamine or cycloalkylene diamine or silane-containing diamine or dialkylene triamine, preferably ethylene diamine, isophorone diamine, diethylene triamine, piperazine, or polyetherdiamine. Diols, such as an alkyldiol, including but not limited to 1,4-butanediol and 2-butyl-2-ethyl-1,3-propanediol, or water, or mixtures thereof can also be used.

The chain extension reaction may be performed until essentially total conversion of the isocyanate groups, i.e. the chain extension agent is continuously added until free isocyanate groups are no longer detectable. It is generally preferred that the chain extension reaction is carried out until total conversion of the isocyanate groups. The conversion can be monitored by techniques well-established in the art, for example IR spectroscopy. Preferred chain extension agents useful according to the present invention include ethylene diamine, isophorone diamine, diethylene triamine and/or a polyetherdiamine.

The aqueous polyurethane dispersion formed preferably has a solid content of 20 to 70 wt.-%, preferably 30 to 60 wt.-%, more preferably 38 to 48 wt.-% (determined using automatic moisture balance). The viscosity is preferably in the range of 50 to 10000 mPas, preferably 100 to 1000 mPas as determined by a Brookfield viscosimeter, spindle 4, 20 rpm. The viscosity may be adjusted to suit the desired application form by adding a thickener. Suitable viscosity adjusting and thickening agents are well-known in the art. The particle size as determined by dynamic light scattering (DLS) according to ISO 22412 is preferably in the range of 50 to 500 nm, more preferably 100 to 300 nm, most preferably 100 to 200 nm.

The present invention also relates to adhesive compositions that comprise the aqueous polyurethane dispersions. The dispersion may then be used as an adhesive, in particular cold seal adhesives on various materials, such as oriented polypropylene (OPP), treated OPP, aluminum foil and polyesters. The dispersions are preferably free of organic solvents, volatile organic compounds, metal catalysts, and/or inorganic fillers and hence are particularly suitable for application in food, cosmetic and pharmaceutical packaging applications. The use of the polyurethane dispersions and adhesive compositions disclosed herein for cold seal adhesive applications, in particular packaging applications, thus also forms parts of the present invention. Such adhesive compositions can contain further ingredients all of which are well-known in the field. In various embodiments, the polyurethane dispersions described herein can be blended with ethyl vinyl acetate (EVA), acrylics, styrene acrylics or other dispersions. Other additives commonly used are antiblocking agents, biocides and defoamers. In various embodiments, the adhesive compositions contain 60-80 wt.-% relative to the total weight of the composition of the PU dispersion. In preferred embodiments they additionally contain 10-20 of another dispersion, such as an EVA dispersion.

As described above, it is preferred that neither the dispersions nor the final compositions containing the dispersions contain organic solvents. Accordingly, as described above, in case a solvent has been used for the dispersion of the PU prepolymer, said solvent is removed after chain extension, such that, in various embodiments, the dispersions and/or compositions are essentially free of organic solvents.

In various embodiments, the dispersions and final compositions are also essentially free of inorganic fillers, and/or volatile organic compounds (VOC), and/or metal-containing compounds, and/or aromatic compounds.

"Essentially free", as used in this context, means that the dispersion and/or composition contains less than 1 wt.-% of the given component, preferably less than 0.5 wt.-%, more preferably less than 0.1 wt.-%, most preferably less than 0.01 wt.-%.

The adhesives containing the dispersions described herein show good adhesive strength, while being solvent free and thus environmentally friendly.

The adhesives can be applied to the substrate by all known techniques, including without limitation, spraying, painting, dip-coating, spin-coating, printing and the like.

It is understood that all embodiments disclosed herein in relation to the methods are similarly applicable to the disclosed dispersions, compositions, and uses and vice versa.

The following examples are given to illustrate the present invention. Because these examples are given for illustrative purposes only, the invention should not be deemed limited thereto.

### Examples

### Example 1:

Desmophen 2061 BD polypropylene polyol (22.5 g), PolyTHF 1000 polyether polyol (22.5 g), and 2,2'-bis(hydroxymethyl)propionic acid (DMPA; 1.7 g) anionic stabilizer were placed in a 500 mL three necked round bottom flask equipped with a condenser and a mechanical stirrer. The mixture was heated to 75 °C. At this temperature, the solid components melted and a homogeneous mixture was obtained. At this point, high vacuum was applied (< 0.1 mbar) while the temperature was set to 80 °C in order to remove water. The mixture was left stirring under vacuum at 80°C for two hours.

Once dried, the vacuum was stopped and the mixture was flushed with argon, cooled to 60 °C and IPDI (isophorone diisocyanate, 12.5 g) was added to the mixture.

Then a tin-free catalyst (DABCO, 30 mg of a freshly prepared catalyst / acetone mixture (1:6)) was added. Upon addition of the catalyst, the temperature raised rapidly to 75°C. When the temperature increase stopped, the heating was set to 85 °C and once at this temperature, it was stirred for 3 hours. The reaction mixture was left stirring at 60 °C overnight and NCO-content measured next morning: The reaction was considered finished if the value is close or equal to the theoretical one (1.67%).

Then 30 g acetone (35 wt.%) were added to dissolve the prepolymer which was still warm (60°C) in a 35/65 weight ratio. This mixture was mixed very well at 60°C for 30 minutes. Then 1.15 g triethylamine (TEA) was added dropwise to neutralize the carboxyl groups of DMPA.

Then the emulsification process was carried out as follows: The total amount of prepolymer solution was mixed with warm water to obtain a mixture 46/54 by weight of PU acetone solution/water. The mixture was emulsified by mechanical stirring at 400 rpm for 20 min.

Then, the chain extension was performed by placing the resulting emulsion in a round bottom flask with mechanical stirrer and isophorone diamine (IPDA, 0.8g) and diethylene triamine (0.3 g, DETA) were added. 70% of the total IPDA and DETA was added until no residual NCO was detected in IR.

The resulting dispersion was left overnight to cool down to room temperature. Next day, dispersion was filtered, the particle size was measured and the solid content was measured after acetone evaporation.
Solid content: 40%
Particle size (DLS, ISO 22412): 171 nm

### Example 2:

Desmophen 2061 BD polypropylene polyol (22.5 g), PolyTHF 1000 polyether polyol (22.5 g), and 2,2'-bis(hydroxymethyl)propionic acid (DMPA; 1.7 g) anionic stabilizer were placed in a 500 mL three necked round bottom flask equipped with a condenser and a mechanical stirrer. The mixture was heated to 75 °C. At this temperature, the solid components melted and a homogeneous mixture was obtained. At this point, high vacuum was applied (< 0.1 mbar) while the temperature was set to 80 °C in order to remove water. The mixture was left stirring under vacuum at 80°C for two hours.

Once dried, the vacuum was stopped and the mixture was flushed with argon, cooled to 60 °C and IPDI (isophorone diisocyanate, 11.5 g) was added to the mixture. No catalyst was used to carry out the reaction. Upon addition of the isocyanate, the temperature increased a little. When the temperature increase stopped, the heating was set to 95 °C and once at this temperature, it was stirred for 3 hours. Then the NCO-content was measured and the reaction considered finished if the value is close or equal to the theoretical one (0.85%).

The temperature was decreased to 60°C and 70 g acetone (55 wt.%) were added to dissolve the prepolymer which was still warm (60°C) in a 55/45 weight ratio. This mixture was mixed very well at 60°C for 30 minutes.

Then 1.01 g N,N-dimethylethanolamine (DMAE) was added dropwise to neutralize the carboxyl groups of DMPA.

Then the emulsification process was carried out as follows: The total amount of prepolymer solution was mixed with warm water to obtain a mixture 46/54 by weight of PU acetone solution/water. The mixture was emulsified by mechanical stirring at 400 rpm for 20 min.

Then, the chain extension was performed by placing the resulting emulsion in a round bottom flask with mechanical stirrer and isophorone diamine (IPDA, 0.68g) and diethylene triamine (0.27 g, DETA) were added. 70% of the total IPDA and DETA was added until no residual NCO was detected in IR.

The resulting dispersion was left overnight to cool down to room temperature. Next day, dispersion was filtered, the particle size was measured and the solid content was measured after acetone evaporation.
Solid content: 40%
Particle size (DLS, ISO 22412): 130 nm

### Example 3:

Prepolymer synthesis was carried out as in Example 2, but different chain extenders were used: Chain extension was performed by placing the emulsion in a round bottom flask with mechanical stirrer and ethylene diamine (EDA, 0.38g) was added. 70% of the total EDA was added until no residual NCO was detected in IR.

The resulting dispersion was left overnight to cool down to room temperature. Next day, dispersion was filtered, the particle size was measured and the solid content was measured after acetone evaporation.
Solid content: 38%
Particle size (DLS, ISO 22412): 172nm

### Example 4:

Prepolymer synthesis was carried out as in Example 2, but different chain extenders were used: Chain extension was performed by placing the emulsion in a round bottom flask with mechanical stirrer and isophorone diamine (IPDA, 1.2g) was added. 70% of the total IPDA was added until no residual NCO was detected in IR.

The resulting dispersion was left overnight to cool down to room temperature. Next day, dispersion was filtered, the particle size was measured and the solid content was measured after acetone evaporation.
Solid content: 38%
Particle size (DLS, ISO 22412): 184nm

### Example 5:

Desmophen 2061 BD polypropylene polyol (22.5 g), PolyTHF 1000 polyether polyol (22.5 g), and 2,2'-bis(hydroxymethyl)propionic acid (DMPA; 1.6 g) anionic stabilizer were placed in a 500 mL three necked round bottom flask equipped with a condenser and a mechanical stirrer. The mixture was heated to 75 °C. At this temperature, the solid components melted and a homogeneous mixture was obtained. At this point, high vacuum was applied (< 0.1 mbar) while the temperature was set to 80 °C in order to remove water. The mixture was left stirring under vacuum at 80°C for two hours.

Once dried, the vacuum was stopped and the mixture was flushed with argon, cooled to 60 °C and IPDI (isophorone diisocyanate, 10.8 g) and the triisocyanate (1.2g; Desmodur N3300) were added to the mixture. No catalyst was used to carry out the reaction. Upon addition of the isocyanate, the temperature increased a little. When the temperature increase stopped, the heating was set to 95 °C and once at this temperature, it was stirred for 3 hours. Then the NCO-content was measured and the reaction considered finished if the value is close or equal to the theoretical one (0.84%)

The temperature was decreased to 60°C and 73 g acetone (56 wt.%) were added to dissolve the prepolymer which was still warm (60°C) in a 56/44 weight ratio. This mixture was mixed very well at 60°C for 30 minutes.

Then 0.95 g N,N-dimethylethanolamine (DMAE) was added dropwise to neutralize the carboxyl groups of DMPA.

Then the emulsification process was carried out as follows: The total amount of prepolymer solution was mixed with warm water to obtain a mixture 46/54 by weight of PU acetone solution/water. The mixture was emulsified by mechanical stirring at 400 rpm for 20 min.

Then, the chain extension was performed by placing the resulting emulsion in a round bottom flask with mechanical stirrer and ethylene diamine (EDA, 0.39g) was added. 70% of the total IPDA was added until no residual NCO was detected in IR.

The resulting dispersion was left overnight to cool down to room temperature. Next day, dispersion was filtered, the particle size was measured and the solid content was measured after acetone evaporation.
Solid content: 40%
Particle size (DLS, ISO 22412): 177nm

### Example 6: Cold sealing adhesive for packaging

Cold sealing adhesive compositions comprising the dispersions described in Examples 1-5 were manufactured as follows: Each prepared polyurethane dispersion was placed in a mixing vessel and stirred for some minutes using a propeller stirrer (IKA Works Sdn. Bhd.; 350 cycles per minutes). Then, polymer dispersions (EVA, acrylic, styrene acrylic, etc.), antiblocking agents and additives were added and homogenized. The formulations obtained are coated on different substrates at coating weights between 3.1-4.7 g/m².

### Test method

- Green tack: Testing green tack by hand is a pre-screening for personal judgement based on subjective experience to define samples which have good possibility to work for further investigation.
- Adhesion test: The coldseal surface was sealed with a pressure sensitive tape (25°C, 3 bar, 0.5 sec). Samples were separated and immediately on tensiometer after sealing.
- Seal strength: Two 25 mm coldseal surfaces were sealed using crimp jaws (RDM Test Equipment, HSM-4; 25°C, 3 bar, 0.5 sec). Samples were separated and immediately on tensiometer (Zwick tensil test machine) after sealing. Seals should be checked triplicate. Seals can also be checked after a set of period of time to evaluate aged seal performance and storage effects.
- Coating weight: The test piece from the coldseal coating was cut and its area was calculated. The test piece was weighed using an analytical balance (Mettler Toledo Classic, AB204-S). The sample was re-weighed after removing the coldseal from the sample and the coating weight was calculated at least in triplicate.

### Pure PU dispersions

The cold sealing adhesive compositions comprising dispersions described in examples 2 to 4 were coated on untreated coextruded OPP at a coating weight of approximately 4 g/m² using a Meyer bar. The results obtained for seal strength and adhesion are shown in the Table 1.

**Table 1**

| **Sample** | **Seal strenght (N/25mm) 3 bar, 0.5 sec** | **Adhesion (N/25mm) 3 bar, 0.5 sec** | **Seal strenght after 7d (N/25mm) 3bar, 0.5 sec** |
|---|---|---|---|
| Comparative Example* | 4.3 | 4.0 | 3.8 |
| Example 2 | 4.5 | 6.2 | 3.2 |
| Example 3 | 5.5 | 5.9 | 4.7 |
| Example 4 | 5.4 | 5.3 | 3.3 |

| | | | |
|---|---|---|---|
| *Comparative Example: Commercial material based on synthetic polyisoprene. | | | |

### Formulations based on PUD and EVA

Polyurethane dispersions from Example 2 and 3 were placed in a mixing vessel and stirred for some minutes using a propeller stirrer (IKA Works Sdn. Bhd.; 350 cycles per minutes). Then, EVA dispersion with pH adjusted by ammonia solution was added. The ratio between PUD/EVA was adjusted to 80/20. Finally, antiblocking agents and additives were added and homogenized (see Table 2). The formulations obtained are coated in coating machine on treated coextruded OPP at coating weights between 3.1-4.7 g/m².

**Table 2**

| **Formulation** | **PUD** | **EVA dispersion** | **Ratio PUD/EVA** |
|---|---|---|---|
| A | Example 2 | EVA (Vinnapas E400) | 80/20 |
| B | Example 3 | EVA (Vinnapas E400) | 80/20 |

The results regarding seal strength and adhesion for the pure PUDs and the blendings applied on coating machine at a coating weight of 4.7 g/m² are listed in Table 3.

**Table 3**

| **Sample** | **Coating weight (g/m²)** | **seal strenght after 1d (N/25mm)** | **Seal strenght after 6d (N/25mm) 3bar, 0,5 sec** | **adhesion test (N/ 25mm)** |
|---|---|---|---|---|
| Example 2 | 4.7 | 6.9 | 6.8 | 5.6 |
| Formulation A | 4.7 | 6.8 | 7.3 | 7.6 |
| Example 3 | 4.7 | 8.3 | 6 | 9.2 |
| Formulation B | 4.7 | 7.2 | 7.2 | 9.4 |
| Comparative Example* | 5.9 | 4.2 | 4.2 | 4.3 |

| | | | | |
|---|---|---|---|---|
| *Comparative Example: Commercial material based on synthetic polyisoprene. | | | | |

Blocking test was carried out for the same coated OPP films at 10 tons pressure for 24 hours at 25°C, 50%RH (Specac), the results for untreated BOPP release films are listed in Table 4.

**Table 4**

| **Formulation** | **Untreated BOPP release film** |
|---|---|
| Example 2 | 0.1 |
| Formulation A | 0.1 |
| Example 3 | 0.1 |
| Formulation B | 0.1 |
| Comparative Example* | 0.5 |

| | |
|---|---|
| *Comparative Example: Commercial material based on synthetic polyisoprene. | |

Typical examples of untreated BOPP release films are NND from Treofan and BRT from Tagleef.

Polyurethane dispersion from Example 3 was placed in a mixing vessel and stirred for some minutes using a propeller stirrer (IKA Works Sdn. Bhd.; 350 cycles per minutes). Then, EVA dispersion with pH adjusted by ammonia solution was added. PUD/EVA ratio was adjusted to different proportions (from 80/20, 70/30 and 60/40). Finally, antiblocking agents and additives were added and homogenized (see Table 5).

**Table 5**

| **Formulation** | **PUD** | **EVA dispersion** | **Ratio PUD/EVA** |
|---|---|---|---|
| B | Example 3 | EVA | 80/20 |
| C | Example 3 | EVA | 70/30 |
| D | Example 3 | EVA | 60/40 |

The formulations obtained are coated using Meyer bar and tested on different substrates: white cavitated coextruded film (MW247) and acrylic coated film (MW647) at coating weights 3.6 g/m² and the results regarding seal strength and adhesion on these substrates for the blendings are listed in Table 6 and Table 7 .

**Table 6**

| **Sample** | **seal strenght after 1d (N/ 25mm)** | **seal strenght after 1d (N/ 25mm)** |
|---|---|---|
| | **MW247** | **MW647** |
| B | 4.8 | 4.5 |
| C | 5.9 | 4.6 |
| D | 5.9 | 4.7 |

**Table 7**

| **Sample** | **adhesion (N/ 25mm)** | **adhesion (N/ 25mm)** |
|---|---|---|
| | **MW247** | **MW647** |
| B | 8.7 | 8.3 |
| C | 8.4 | 7.1 |
| D | tear | 7.0 |

### Formulations based on PUD and other polymers

Polyurethane dispersion from Example 3 was placed in a mixing vessel and stirred for some minutes using a propeller stirrer (IKA Works Sdn. Bhd.; 350 cycles per minutes). Then, different polymeric dispersions with pH adjusted by ammonia solution were added. These polymeric dispersions were based on ethyl vinyl acetate (EVA, typical example EP400), acrylics (A, typical example Plextol R1A, Tg range -5°C to +30°C) and styrene acrylics (SA, typical example Vinacryl 7190, Tg range -5°C to +30°C) dispersions. The ratios between the two dispersions are shown in Table 8. Finally, antiblocking agents and additives were added and homogenized. The formulations obtained are coated in coating machine on treated coextruded OPP at coating weights between 3.1-4.7 g/m².

**Table 8**

| **Formulation** | **PUD** | **Polymer dispersion** | **Ratio (PUD/EVA, PUD/A, or PUD/SA)** |
|---|---|---|---|
| **B** | Example 3 | EVA | 80/20 |
| **C** | Example 3 | EVA | 70/30 |
| **D** | Example 3 | EVA | 60/40 |
| **E** | Example 3 | A | 95/5 |
| **F** | Example 3 | A | 90/10 |
| **G** | Example 3 | A | 85/15 |
| **H** | Example 3 | SA | 95/5 |
| **I** | Example 3 | SA | 90/10 |
| **J** | Example 3 | SA | 85/15 |

The seal strength and the adhesion properties on treated MW 647 and treated MW 247 coated with coating bar at coating weights of 3.8 g/m² were tested and the results are gathered below in Table 9 and Table 10 respectively.

**Table 9 (on treated MW647)**

| **Formulation** | **Seal strength (N/ 25mm) 3bar, 0.5sec** | **Adhesion test (N/25mm) 3bar, 0.5sec** |
|---|---|---|
| **Comparative Example** | 4.4 | 5.9 |
| **B** | 4.5 | 8.3 |
| **C** | 4.7 | 7.1 |
| **D** | 4.6 | 7.0 |
| **E** | 6.6 | 8.8 |
| **F** | 6.3 | >10.2 |
| **G** | 6.3 | >10.6 |
| **H** | 5.7 | 9.1 |
| **I** | 6.1 | 8.9 |
| **J** | 6.2 | 7.9 |

| | | |
|---|---|---|
| *Comparative Example: Commercial material based on synthetic polyisoprene. | | |

**Table 10 (on treated MW247)**

| **Formulation** | **Seal strenght (N/25mm) 3bar, 0.5sec** | **adhesion test (N/25mm) 3bar, 0.5sec** |
|---|---|---|
| **Comparative Example** | 3.5 | 5.2 |
| **B** | 4.8 | 8.7 |
| **C** | 4.8 | 8.7 |
| **D** | tear | >9.1 |
| **E** | tear | 8.6 |
| **F** | tear | >9.6 |
| **G** | tear | >10.0 |
| **H** | tear | 9.0 |
| **I** | tear | >10.0 |
| **J** | tear | >10.0 |

| | | |
|---|---|---|
| *Comparative Example: Commercial material based on synthetic polyisoprene. | | |

The blocking properties (N/25mm) versus different films are shown in Table 11 for at 3.6 g/m² coating weights.

**Table 11**

| **Formulation** | **Release lacquer 1** | **Release lacquer 2** | **Release lacquer 1** | **Untreated plain BOPP release film** f |
|---|---|---|---|---|
| **Comparative Example** | 0.1 | 0.1 | 0.5 | 1.0 |
| **B** | 0.1 | 0.1 | 0.2 | 0.1 |
| **C** | 0.1 | 0.1 | 0.2 | 0.1 |
| **D** | 0.1 | 0.1 | 0.2 | 0.1 |
| **E** | 0.1 | 0.1 | 0.4 | 0.6 |
| **F** | 0.1 | 1.2 | 0.2 | 0.4 |
| **G** | 0.1 | 0.1 | 0.4 | 0.5 |
| **H** | 0.1 | 0.1 | 0.6 | 0.6 |
| **I** | 0.1 | - | 0.5 | 0.6 |
| **J** | 0.1 | 0.1 | 0.9 | 0.7 |

| | | | | |
|---|---|---|---|---|
| *Comparative Example: Commercial material based on synthetic polyisoprene. | | | | |

Typical examples of untreated BOPP release films are NND from Treofan and BRT from Tagleef. Typical example of release lacquers is Loctite Liofol OP 9321.

### Example 7: Cold sealing adhesive for textile and paper

The cold sealing adhesive compositions comprising dispersions described in examples 2 and 3were coated on papers at coating weights between 5-10 g/m² and the stickiness, sealability and bond were checked by hand. The test methods were the same as described for Example 6 above. The results are summarized in Table 12.

**Table 12**

| **Sample** | **Green tack by hand** | **Tack after 3d by hand** |
|---|---|---|
| Comparative Example* | Tacky, strong bond | Slightly tacky, strong bond |
| Example 2 | Tacky, strong bond | Tacky, strong bond |
| Example 3 | Tacky, strong bond | Tackier, more bond |

| | | |
|---|---|---|
| *Comparative Example: Commercial material based on synthetic isoprene | | |

## Claims

1. Process for manufacturing an aqueous polyurethane dispersion, the process comprising:
(1) forming an NCO-terminated polyurethane prepolymer from a reaction mixture comprising:
(a) at least one polyether polyol with a number average molecular weight Mₙ in the range of 400 to 10000 g/mol, preferably 500 g/mol to 3000 g/mol, wherein said at least one polyether polyol preferably is an aliphatic polyether polyol;
(b) at least one anionic stabilizer, wherein the at least one anionic stabilizer comprises at least two hydroxyl groups and at least one negatively charged functional group, preferably a carboxyl or sulfonic acid group; and
(c) at least one aliphatic polyisocyanate, preferably at least one aliphatic di- and/or triisocyanate, wherein the at least one polyisocyanate is used in molar excess relative to the hydroxy groups of the other components of the reaction mixture to obtain an NCO-terminated polyurethane prepolymer;
wherein formation of the NCO-terminated polyurethane prepolymer is carried out in the absence of a tin-containing catalyst, preferably in the absence of a metal catalyst;
(2) dispersing the prepolymer into a continuous aqueous phase under application of shear forces, preferably by mechanical stirring, to obtain an emulsion; and
(3) reacting the prepolymer with at least one chain extension agent to obtain an aqueous polyurethane dispersion.

2. The process according to claim 1, wherein step (1) is carried out in the absence of a catalyst.

3. The process according to claim 1 or 2, wherein the at least one polyether polyol is a polyalkylene glycol homo- or copolymer, preferably a polypropylene glycol homo- or copolymer, a polyethylene glycol homo- or copolymer, a polytetramethylene glycol homo-or copolymer, or a polypropylenglycol/polyethyleneglycol block copolymer.

4. The process according to any one of claims 1 to 3, wherein the process further comprises adding an organic solvent to the prepolymer obtained in step (1) and dispersing the prepolymer/solvent mixture into a continuous aqueous phase and removing the cosolvent, preferably by vacuum distillation, after step (3).

5. The process according to claim 4, wherein
(1) the solvent is acetone; and/or
(2) the solvent is used in an amount of up to 70 wt.-% relative to the total weight of the prepolymer/solvent mixture, preferably 35-68 wt.-%, more preferably 54-65 wt.-%.

6. The process according to any one of claims 1 to 5, wherein the reaction mixture is essentially free of
(1) surfactants; and/or
(2) polyester polyols; and/or
(3) aromatic organic compounds.

7. The process according to any one of claims 1 to 6, wherein the at least one anionic stabilizer comprises a sulfonated polyglycol and/or 2,2-bis(hydroxymethyl)propionic acid (DMPA).

8. The process according to any one of claims 1 to 7, wherein
(1) the at least one polyisocyanate is used in molar excess relative to the hydroxy groups of the combined polyols, the OH/NCO equivalent ratio preferably being 1:1.1 to 1:4, and/or
(2) the at least one aliphatic polyisocyanate is at least one diisocyanate or triisocyanate, preferably selected from the group consisting of isophorone diisocyanate (IPDI), hexamethylene diisocyanate (HDI), polymeric polyisocyanates based on IPDI or HDI, and mixtures thereof.

9. The process according to any one of claims 1 to 8, wherein the chain extension agent comprises at least two NCO-reactive groups and is preferably selected from the group consisting of water, a diol, a diamine or a triamine, more preferably hydrazine, an alkylene diamine, a cycloalkylene diamine, a silane-containing diamine, a dialkylene triamine, an alkyldiol, or a polyetherdiamine, most preferably ethylene diamine, diethylene triamine, water, isophorone diamine, or a polyetherdiamine, and mixtures thereof, and is optionally used in an amount that ensures essentially total conversion of the isocyanate groups.

10. Aqueous polyurethane dispersion obtainable according to a process of any one of claims 1 to 9.

11. Adhesive composition, comprising the aqueous polyurethane dispersion according to claim 10.

12. The adhesive composition according to claim 11, further comprising ethyl vinyl acetate (EVA), acrylics, or styrene acrylics dispersion.

13. The adhesive composition according to claim 11 or 12, wherein the adhesive composition is essentially free of
(1) inorganic fillers; and/or
(2) organic solvents; and/or
(3) volatile organic compounds (VOC); and/or
(4) metal-containing compounds; and/or
(5) aromatic compounds.

14. Use of the aqueous polyurethane dispersion according to claim 10 in an adhesive composition.

15. The adhesive composition according to any one of claims 11 to 13 or the use according to claim 14, wherein the adhesive is a cold sealing adhesive.
